# EUROPEAN PATENT SPECIFICATION

(11) **EP 3 845 463 B1**
(45) Date of publication and mention of the grant of the patent: **03.04.2024**
(21) Application number: 20217856.2
(22) Date of filing: 30.12.2020
(51) Int. Cl.: B64D 37/32, A62C 3/08, A62C 3/06

(54) **FUEL TANK INERTING SYSTEM AND METHOD**
KRAFTSTOFFTANKINERTISIERUNGSSYSTEM UND -VERFAHREN
SYSTÈME ET PROCÉDÉ D'INERTAGE DE RÉSERVOIR DE CARBURANT

(30) Priority: 03.01.2020 US 202016734004
(43) Date of publication of application: 07.07.2021
(73) Proprietor: Hamilton Sundstrand Corporation, Charlotte, NC 28217-4578 (US)
(72) Inventor: EMERSON, Sean C., Broad Brook, CT Connecticut 06016 (US); DARDAS, Zissis A., Worcester, MA Massachusetts 01602 (US); RANJAN, Rajiv, South Windsor, CT Connecticut 06074 (US); SHE, Ying, East Hartford, 06118 (US); CORDATOS, Haralambos, Colchesster, CT Connecticut 06415 (US); PEARSON, Matthew Robert, Hartford, CT Connecticut 06103 (US); SURAWSKI, Eric, Hebron, CT Connecticut 06248 (US)
(74) Representative: Dehns

(56) References cited:
- EP-A1- 3 441 126
- US-A1- 2009 302 163
- US-A1- 2011 263 035
- US-A1- 2012 035 406

## Description

### BACKGROUND

The subject matter disclosed herein generally relates to systems for generating and providing inert gas, oxygen, and/or power on aircraft, and more specifically to fluid flow operation of such systems.

It is recognized that fuel vapors within fuel tanks become combustible or explosive in the presence of oxygen. An inerting system decreases the probability of combustion or explosion of flammable materials in a fuel tank by maintaining a chemically non-reactive or inert gas, such as nitrogen-enriched air, in the fuel tank vapor space, also known as ullage. Three elements are required to initiate combustion or an explosion: an ignition source (e.g., heat), fuel, and oxygen. The oxidation of fuel may be prevented by reducing any one of these three elements. If the presence of an ignition source cannot be prevented within a fuel tank, then the tank may be made inert by: 1) reducing the oxygen concentration, 2) reducing the fuel concentration of the ullage to below the lower explosive limit (LEL), or 3) increasing the fuel concentration to above the upper explosive limit (UEL). Many systems reduce the risk of oxidation of fuel by reducing the oxygen concentration or by introducing an inert gas such as nitrogen-enriched air (NEA) (i.e., oxygen-depleted air or ODA) to the ullage, thereby displacing oxygen with a nitrogen or other inert gases at target thresholds for avoiding explosion or combustion.

It is known in the art to equip vehicles (e.g., aircraft, military vehicles, etc.) with onboard inert gas generating systems, which supply an inert gas to the vapor space (i.e., ullage) within the fuel tank. Various systems have been used or proposed for generating inert gas onboard an aircraft, and each system imposes its own fuel consumption burden vehicle based on various criteria including but not limited to the consumption of compressed air, consumption of electricity, demand for ram air, payload of system components, and combinations including any of the foregoing. Each of the systems that have been used or proposed has its own potential advantages and disadvantages, and there continues to be a demand for technical solutions for the provision of inert gas onboard aircraft. US 2011/263035 A1 describes a system for measuring the oxygen concentration of a gas. US 2012/035406A1 describes the dehydration of liquid fuel.

### BRIEF DESCRIPTION

A system is disclosed for inerting a fuel tank and defined in claim 1.

The system of claim 1 further includes a reactant flow path from the air separation module oxygen-depleted air outlet to a catalytic reactor inlet, and an inert gas bypass flow path from the air separation module oxygen-depleted air outlet to the fuel tank and bypassing the catalytic reactor.

In addition to any one or combination of the above features, the system can further include a controller programmed to operate the system in at least two alternate modes selected from: a first mode in which oxygen-depleted air is directed from the air separation module oxygen-depleted air outlet to the fuel tank through the inert gas bypass flow path and the catalytic reactor is in a non-operative or stand-by mode, a second mode in which oxygen-depleted air is directed from the air separation module oxygen-depleted air outlet through the reactant flow path to the catalytic reactor inlet and the catalytic reactor is an operative mode, and a third mode in which oxygen-depleted air is directed from the air separation module oxygen-depleted air outlet to the fuel tank through the inert gas bypass flow path, and in which oxygen-depleted air is directed from the air separation module oxygen-depleted air outlet through the reactant flow path to the catalytic reactor inlet and the catalytic reactor is in an operative mode.

In addition to any one or combination of the above features, the controller can be programmed to operate the system in the first and second modes.

In addition to any one or combination of the above features, the controller can be programmed to operate the system in the first and third modes.

In addition to any one or combination of the above features, the controller can be programmed to operate the system in each of the first, second, and third modes.

In addition to any one or combination of the above features, the controller can be programmed to operate the system in the first mode in response to a demand signal for inert gas at a first inert gas flow rate, and to operate the system in the second mode or the third mode in response to a demand signal for inert gas at a second inert gas flow rate that is greater than the first inert gas flow rate.

In addition to any one or combination of the above features, the controller can be programmed to operate the system in the second mode or the third mode in response to an aircraft operating condition including descent, and in the first mode in response to an aircraft operating condition not including descent.

In addition to any one or combination of the above features, the system can further include a heater arranged to heat oxygen-depleted air received by catalytic reactor.

In addition to any one or combination of the above features, the system can further include a cooler arranged to cool inert gas generated by the reactor.

In addition to any one or combination of the above features, the system can further include an air flow path from a compressed air source to an inlet of the air separator.

In addition to any one or combination of the above features, the air flow path can be between an aircraft engine compressor section and the inlet of the air separator.

Also disclosed is a method of operating a system including any one or combination of the above features. The method includes directing oxygen-depleted air from the air separator to the catalytic reactor, directing fuel from the fuel tank to the catalytic reactor, reacting the fuel with oxygen in the oxygen-depleted air in the catalytic reactor to produce an inert gas, and directing the inert gas from the catalytic reactor to the fuel tank.

In addition to any one or combination of the above features, the method can further include directing oxygen-depleted air from the air separator to the fuel tank.

In addition to any one or combination of the above features, oxygen-depleted air can be alternately directed between the air separator and one of: the fuel tank and the catalytic reactor.

In addition to any one or combination of the above features, oxygen-depleted air can be jointly directed to the fuel tank and the catalytic reactor.

In addition to any one or combination of the above features, the system can be operated in a first mode in which oxygen-depleted air is directed from the air separation module oxygen-depleted air outlet to the fuel tank through the inert gas bypass flow path and the catalytic reactor is in a non-operative or stand-by mode, and in at least one mode selected from: a second mode in which oxygen-depleted air is directed from the air separation module oxygen-depleted air outlet through the reactant flow path to the catalytic reactor inlet and the catalytic reactor is an operative mode, and a third mode in which oxygen-depleted air is directed from the air separation module oxygen-depleted air outlet to the fuel tank through the inert gas bypass flow path, and in which oxygen-depleted air is directed from the air separation module oxygen-depleted air outlet through the reactant flow path to the catalytic reactor inlet and the catalytic reactor is in an operative mode.

Also disclosed is a method of producing an inert gas. According to the method, air is separated through a membrane with a permeability differential between oxygen and nitrogen to produce oxygen-enriched air and oxygen-depleted air. Fuel is catalytically reacting with oxygen in the oxygen-depleted air to produce the inert gas.

In some aspects, a method of inerting a fuel tank can include separating air through a membrane with a permeability differential between oxygen and nitrogen to produce oxygen-enriched air and oxygen-depleted air, reacting fuel with the oxygen in the oxygen-depleted gas to produce an inert gas, and directing the inert gas to the fuel tank.

In some aspects, the method of inerting a fuel tank can further include directing oxygen-depleted air from the membrane to the fuel tank.

In addition to any one or combination of the above features, the method of inerting a fuel tank can include operation in a first mode in which the oxygen-depleted air is directed from the membrane to the fuel tank without catalytic reaction of the fuel and oxygen, and operation in at least one alternate mode selected from: a second mode in which the oxygen-depleted air is directed from the membrane to a catalyst, and oxygen in the oxygen-depleted air is catalytically reacted with fuel at the catalyst; and a third mode in which the oxygen-depleted air is directed from the membrane to the fuel tank and from the membrane to the catalyst, and oxygen in the oxygen-depleted air is catalytically reacted with fuel at the catalyst.

In addition to any one or combination of the above features, the method of inerting a fuel tank can include operation in the first mode in response to a demand for inert gas at a first inert gas flow rate, and operation in the second mode or the third mode in response to a demand for inert gas at a second inert gas flow rate that is greater than the first inert gas flow rate.

### BRIEF DESCRIPTION OF THE DRAWINGS

The following descriptions should not be considered limiting in any way. With reference to the accompanying drawings, like elements are numbered alike:
FIGS. 1A and 1B are schematic illustrations of different views of an aircraft;
FIG. 2 is a schematic illustration of a portion of a fuel tank inerting system including a catalytic reactor in accordance with an embodiment of the disclosure;
FIG. 3 is a schematic illustration of a membrane air separator; and
FIG. 4 is a schematic illustration of a fuel tank inerting system including an air separator and a catalytic reactor in accordance with an example embodiment of the disclosure.

### DETAILED DESCRIPTION

A detailed description of one or more embodiments of the disclosed apparatus and method are presented herein by way of exemplification and not limitation with reference to the Figures.

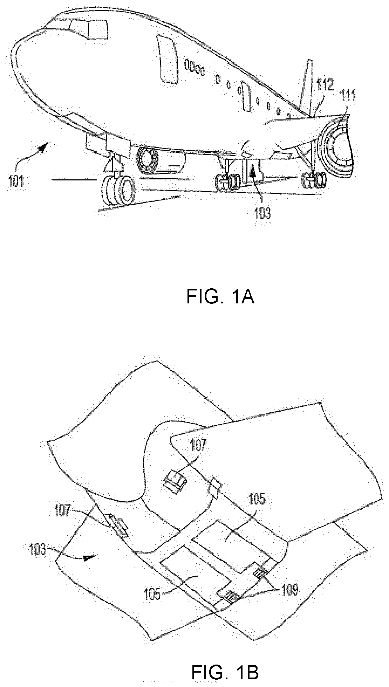

FIGS. 1A-1B are schematic illustrations of an aircraft 101 that can employ one or more embodiments of the present disclosure. As shown in FIGS. 1A-1B, the aircraft 101 includes bays 103 beneath a center wing box. The bays 103 can contain and/or support one or more components of the aircraft 101. For example, in some configurations, the aircraft 101 can include environmental control systems and/or fuel inerting systems within the bay 103. As shown in FIG. 1B, the bay 103 includes bay doors 105 that enable installation and access to one or more components (e.g., environmental control systems, fuel tank inerting systems, etc.). During operation of environmental control systems and/or fuel tank inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, fuel inerting systems, etc.). Some air may be exhausted through one or more ram air exhaust outlets 109.

Also shown in FIG. 1A, the aircraft 101 includes one or more engines 111. The engines 111 are typically mounted on wings of the aircraft 101, but may be located at other locations depending on the specific aircraft configuration. In some aircraft configurations, air can be bled from the engines 111 and supplied to environmental control systems and/or fuel tank inerting systems, as will be appreciated by those of skill in the art.

Aspects of the function of fuel tank flammability reduction systems in accordance with embodiments of the present disclosure can be accomplished by catalytic reaction of fuel (e.g., a "first reactant") with a source of gas containing oxygen such as air (e.g., a "second reactant"). The product of the reaction is carbon dioxide and water vapor. The source of the second reactant (e.g., air) can be bleed air or any other source of air containing oxygen, including, but not limited to, high-pressure sources (e.g., engine), bleed air, cabin air, etc. A catalyst material such as a noble metal catalyst is used to catalyze the chemical reaction. The carbon dioxide that results from the reaction is an inert gas that is mixed with nitrogen naturally found in fresh/ambient air, and is directed back within a fuel tank to create an inert environment within the fuel tank, thus reducing the flammability of the vapors in the fuel tank.

As mentioned above, a catalyst is used to catalyze a chemical reaction between oxygen (O₂) and fuel to produce carbon dioxide (CO₂) and water. The source of O₂ used in the reaction can come from any of a number of air sources, including, but not limited to, pneumatic sources on an aircraft that supply air at a pressure greater than ambient. Any inert gas species that are present with the reactants (for example, nitrogen) will not react and will thus pass through the catalyst unchanged.

The catalytic chemical reaction between fuel and air also generates water. Water in the fuel tank can be undesirable. Thus, in accordance with embodiments of the present disclosure, the water from a product gas stream (e.g., exiting the catalyst) can be removed through various mechanisms, including, but not limited to, condensation. The product gas stream can be directed to enter a heat exchanger downstream from the catalyst that is used to cool the product gas stream such that the water vapor condenses out of the product gas stream. The liquid water can then be drained overboard. In some embodiments, an optional water separator can be used to augment or provide water separation from the product stream.

Aircraft fuel tanks are typically vented to ambient pressure. At altitude, pressure inside the fuel tank is very low and is roughly equal to ambient pressure. However, during descent, the pressure inside the fuel tank needs to rise to equal ambient pressure at sea level (or at whatever altitude the aircraft is landing). This change in pressure requires gas entering the tank from outside to equalize with the pressure in the tank. Outside air entering the fuel tank can provide oxygen for combustion of the fuel, and the systems disclosed herein can provide an inert gas to the fuel tank to help reduce the risk of combustion.

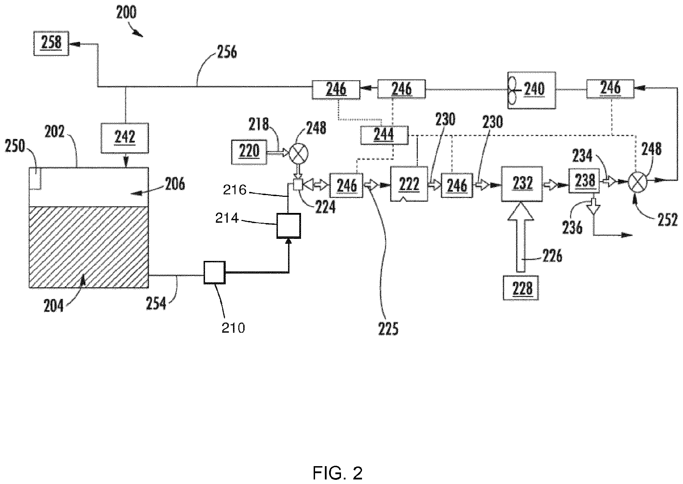

FIG. 2 is a schematic illustration of a flammability reduction or inerting system portion 200 utilizing a catalytic reaction between first and second reactants to produce inert gas in accordance with an embodiment of the present disclosure. The inerting system portion 200, as shown, includes a fuel tank 202 having fuel 204 therein. As the fuel 204 is consumed during operation of one or more engines, an ullage space 206 forms within the fuel tank 202. To reduce flammability risks associated with vaporized fuel that may form within the ullage space 206, an inert gas can be generated and fed into the ullage space 206.

The inerting system portion 200 utilizes the catalytic reactor 222 to catalyze a chemical reaction between oxygen (second reactant 218) and fuel (first reactant 216) to produce carbon dioxide-containing for the inert gas (inert gas 234) and water in vapor phase (byproduct 236). The source of the second reactant 218 (e.g., oxygen) used in the reaction can come from any source on the aircraft that is at a pressure greater than ambient, including but not limited to bleed air from an engine, cabin air, high pressure air extracted or bled from an engine, etc. (i.e., any second reactant source 220 can take any number of configurations and/or arrangements), and as disclosed in more detail hereinbelow includes a membrane air separator. Even non-air oxygen sources can be used, and "air" is used herein as a short-hand term for any oxygen-containing gas. The fuel (first reactant 216) is provided by pressurizing fuel 204 from the fuel tank 202 with a pump 210 and atomizing it in an injector 214. The atomized fuel (first reactant 216) from the injector 214 can be mixed with second reactant 218 in a mixing zone 224 and delivered to the catalytic reactor 222 as shown in FIG. 2, or the reactants 216, 218 can each be directly delivered to the reactor.

With continued reference to FIG. 2, the mixed reactant stream 225 (e.g., fuel and oxygen or air) is then introduced to the catalytic reactor 222, catalyzing a chemical reaction that transforms the mixed reactant stream 225 (e.g., fuel and air) into the inert gas 234 and the byproduct 236 (e.g., water vapor). It is noted that any inert gas species that are present in the mixed reactant stream 225 (for example, nitrogen from the air) will not react and will thus pass through the catalytic reactor 222 unchanged. In some aspects (not shown), the catalytic reactor 222 can include heat exchange components for rejection of heat from the catalytic reactor 222 to a heat sink.

The catalytic reactor 222 can be temperature controlled to ensure a desired chemical reaction efficiency such that an inert gas can be efficiently produced by the inerting system portion 200 from the mixed reactant stream 225. Accordingly, cooling air 226 can be provided to extract heat from the catalytic reactor 222 to achieve a desired thermal condition for the chemical reaction within the catalytic reactor 222. The cooling air 226 can be sourced from a cool air source 228. A catalyzed mixture 230 leaves the catalytic reactor 222 and is passed through a heat exchanger 232. The heat exchanger 232 operates as a condenser on the catalyzed mixture 230 to separate out an inert gas 234 and a byproduct 236 (e.g., water). A cooling air is supplied into the heat exchanger 232 to achieve the condensing functionality. In some embodiments, as shown, a cooling air 226 can be sourced from the same cool air source 228 as that provided to the catalytic reactor 222, although in other embodiments the cool air sources for the two components may be different. The byproduct 236 may be water vapor, and thus in the present configuration shown in FIG. 2, an optional water separator 238 is provided downstream of the heat exchanger 232 to extract the water from the catalyzed mixture 230, thus leaving only the inert gas 234 to be provided to the ullage space 206 of the fuel tank 202. In some embodiments, the inerting system portion 200 can supply inert gas to multiple fuel tanks on an aircraft. After the inert gas 234 is generated, the inert gas 234 will flow through a fuel tank supply line 256 to supply the inert gas 234 to the fuel tank 202 and, optionally, additional fuel tanks 258.

A flow control valve 248 located downstream of the heat exchanger 232 and optional water separator 238 can meter the flow of the inert gas 234 to a desired flow rate. An optional boost fan 240 can be used to boost the gas stream pressure of the inert gas 234 to overcome a pressure drop associated with ducting between the outlet of the heat exchanger 232 and the discharge of the inert gas 234 into the fuel tank 202. The flame arrestor 242 at an inlet to the fuel tank 202 is arranged to prevent any potential flames from propagating into the fuel tank 202.

Typically, independent of any aircraft flammability reduction system(s), aircraft fuel tanks (e.g., fuel tank 202) need to be vented to ambient pressure. Thus, as shown in FIG. 2, the fuel tank 202 includes a vent 250. At altitude, pressure inside the fuel tank 202 is very low and is roughly equal to ambient pressure. During descent, however, the pressure inside the fuel tank 202 needs to rise to equal ambient pressure at sea level (or whatever altitude the aircraft is landing at). This requires gas entering the fuel tank 202 from outside to equalize with the pressure in the tank. When air from outside enters the fuel tank 202, water vapor can be carried by the ambient air into the fuel tank 202. To prevent water/water vapor from entering the fuel tank 202, the inerting system portion 200 can repressurize the fuel tank 202 with the inert gas 234 generated by the inerting system portion 200. This can be accomplished by using the valves 248. For example, one of the valves 248 may be a flow control valve 252 that is arranged fluidly downstream from the catalytic reactor 222. The flow control valve 252 can be used to control the flow of inert gas 234 into the fuel tank 202 such that a slightly positive pressure is always maintained in the fuel tank 202. Such positive pressure can prevent ambient air from entering the fuel tank 202 from outside during descent and therefore prevent water from entering the fuel tank 202.

A controller 244 can be operably connected to the various components of the inerting system portion 200, including, but not limited to, the valves 248 and the sensors 246. The controller 244 can be configured to receive input from the sensors 246 to control the valves 248 and thus maintain appropriate levels of inert gas 234 within the ullage space 206. Further, the controller 244 can be arranged to ensure an appropriate amount of pressure within the fuel tank 202 such that, during a descent of an aircraft, ambient air does not enter the ullage space 206 of the fuel tank 202.

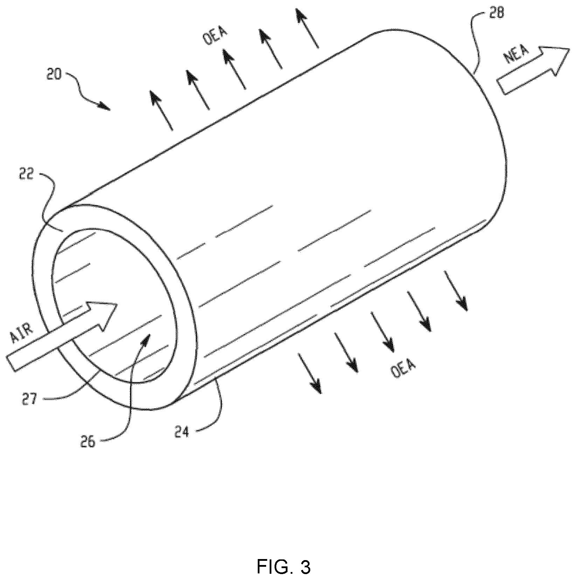

As mentioned above, the inert gas system also includes a gas separator including a membrane with a permeability differential between oxygen and nitrogen. An example embodiment of a membrane separator is shown in FIG. 3. FIG. 3 depicts a tubular membrane, but other configurations such as planar membranes can also be used. As shown in Fig. 3, a tubular membrane 20 comprises a tubular shell 22. The membrane 20 can be fabricated from a material that has selective permeability to oxygen compared to nitrogen such that a pressure differential across the membrane provided by a gas comprising nitrogen and oxygen on the high-pressure side of the membrane will preferentially diffuse oxygen molecules across the membrane. For ease of illustration, the membrane 20 is depicted as a monolithic hollow shell, and membranes fabricated solely out of the selective oxygen-permeable membrane material are included within the scope of this invention. However, in many cases, the membrane is a composite of a substrate or layer that is permeable to both oxygen and nitrogen and a substrate or layer that is selectively permeable to oxygen.

The shell 22 defines a hollow core 26 that is open at both ends. In use, pressurized gas comprising nitrogen and oxygen (e.g., air which is known to also contain trace amounts of noble/inert gases) is delivered into the hollow core 26 at an inlet end 27 of the membrane 20. The pressure of the air is greater than air outside the core 26 such that a pressure differential between the hollow core 26 and air at the exterior 24 of the membrane 20 exists. Oxygen molecules preferentially diffuse through the tubular membrane 20 compared to nitrogen molecules, resulting in a flow of oxygen enriched air (OEA) from the outer surface of the tubular membrane 20 as shown in FIG. 3, and a flow of nitrogen enriched air (NEA) from the hollow core 26 at the outlet end 28 of the membrane 20 as shown in FIG. 2. The membrane 20 can be formed from different materials, including but not limited to polymers (e.g., polyimides, polysulfones, polycarbonates) including polymers of intrinsic microporosity ("PIM") (e.g., polybenzodioxanes) and thermally-rearranged ("TR") polymers (e.g., thermally-rearranged polybenzoxazoles), or refractory ceramics (e.g., zeolite).

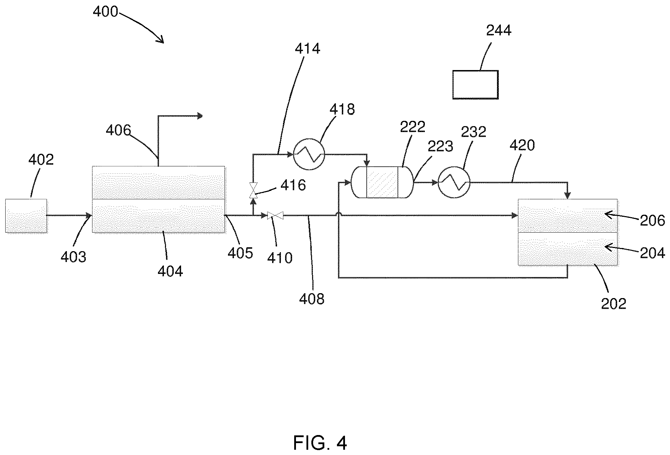

An example embodiment of an inert gas generating system 400 including a membrane separator is schematically shown in FIG. 4. Fluid flows between the components in FIG. 4 through the arrowed lines that are described contextually below unless explicitly identified and numbered. As shown in FIG. 4, air from an air source 402 is directed first to an inlet 403 of a membrane separator module 404 that can be formed from bundles of tubular membranes such as shown in FIG. 3. Other components (not shown) can be disposed along the air flow path between the air source 402 and the membrane separator module inlet 403. For example, in the case of a gas turbine engine compressor section air source, the hot compressed air can be directed to a heat rejection side of a heat exchanger to be cooled to a temperature suitable for the membrane. Other components can also be included upstream of the membrane separator module 404, including but not limited to one or more filter components, including but not limited to a particulate filter (e.g., a HEPA filter) for removal of particulates, or a coalescing filter for removal of liquid entrained in the air flow. In the case of multiple filter components, they can be integrated into a single module or can be disposed in separate modules (not shown) on the air flow path. Other air treatment modules can be included upstream of the membrane separator module 404, including but not limited to catalytic treatment modules such as for ozone removal.

With continued reference to FIG. 4, oxygen-enriched air from the membrane separator module 404 is discharged from an outlet 406, from which it can be exhausted off-board or can be directed to an on-board system such as the cockpit, cabin, or an occupant oxygen breathing system (not shown). Oxygen-depleted air discharged from an outlet 405 of the membrane separator module 404 can be directed along an inert gas flow path 408 through valve 410 to the ullage space 206 of fuel tank 202, or along a reactor feed flow path 414 through valve 416 to a catalytic reactor 222, or along both the inert gas flow path 408 and the reactor feed flow path 414. Oxygen-depleted air bound for the catalytic gas reactor 222 can be pre-heated in optional heater 418, from which it is fed to the catalytic gas reactor 222 along with fuel from the fuel tank 202 and reacted to form an inert gas including carbon dioxide and water. The inert gas reaction products of the reaction in the catalytic gas reactor 222 are discharged from an outlet 223 to an inert gas flow path 420 where the gas can be cooled (and water vapor condensed and removed) in the heat exchanger 232 before being directed along the inert gas flow path 420 to the ullage space 206 of fuel tank 202.

In operation, the system 400 or variants on the system 400 can be operated in different modes of operation, including but not limited to: a first mode in which oxygen-depleted air is directed from the air separation module 404 to the fuel tank ullage 206 through a bypass around the catalytic reactor 222 through the flow path 408 and the catalytic reactor 222 is in a non-operative or stand-by mode, a second mode in which oxygen-depleted air is directed from the air separation module 404 through a reactant flow path to the catalytic reactor 222 in the form of the reactor feed flow path 414 and the catalytic reactor 222 is an operative mode, or a third mode in which oxygen-depleted air is directed from the air separation module 404 to the fuel tank ullage 206 through the flow path 408 and through the reactor feed flow path 414 to the catalytic reactor 222 and the catalytic reactor 222 is in an operative mode. These or other modes of operation can be implemented by the controller 244 in response to operator command or in response to operational states of the aircraft and its fuel system. For example, during aircraft descent, the system demand for inert gas can be relatively high because increasing outside atmospheric pressure tends to force outside air into the fuel tank through the vent system, and a greater pressure of inert gas is needed in order to displace outside air or prevent inflow of outside air. However, under other operating conditions such as cruise or aircraft ascent, the system demand for inert gas can be relatively low as there is no pressure-driven inflow of outside air.

In some aspects, the system can be operated with only the air separator 404 during conditions of lower inert air demand such as aircraft ascent or cruise. Under this operating mode (e.g., the first mode), the valve 410 can be open and the valve 416 can be closed with the catalytic reactor 222 in a non-operative or stand-by mode and the oxygen-depleted air from the air separator 404 directed along the flow path 408 to the fuel tank ullage 206. In a non-operative mode, the catalytic reactor 222 is in a shutdown state with no catalytic reaction taking place. In a stand-by state, a small amount of fuel and air (e.g., air from an auxiliary air inlet, not shown) can be fed at a low level for catalytic reaction to maintain a temperature in the reactor, elevated compared to the ambient temperature, from which full reaction capacity can be readily attained. In this operational mode, relatively lower flow rates through the air separator 404 allow for sufficient back pressure to be maintained in the air separator 404 to drive oxygen across the membrane to provide inert gas.

However, under conditions of higher inert gas demand such as aircraft descent, flow rates can be increased through the air separator 404 with reduced back pressure, resulting in a higher flow rate of oxygen-depleted air from the air separator but at a higher oxygen content than produced under conditions of higher back pressure. Under this operating condition, all or part of the oxygen-depleted air produced by the air separator 404 can be directed along the flow path 414 to the catalytic reactor 222 in an operational state, where it is reacted with fuel to further reduce its oxygen content and incorporate the oxygen into non-combustible by-products. In these operational modes (e.g., the second or third mode), the valve 416 is open, and the valve 410 can be open or closed. In operational modes where oxygen-depleted air from the air separator 404 is directed along each of the flow paths 408 and 414 (e.g., the third mode), both valves 410 and 416 can be open, with the respective position(s) of the valve(s) set to provide a specified flow of oxygen-depleted air on each of the flow paths 408 and 414.

In some aspects, the above-described system configuration and modes of operation can provide a technical effect of allowing for significant size (e.g., shorter length tubular membranes) and design capacity reductions of the air separator 404 compared to prior systems that use only membrane separators, which can promote reduced demand for bleed air. The catalytic reactor 222 and its associated components can also be sized smaller compared to prior proposed systems that use only catalytic reaction of fuel to produce inert gas, and can achieve significantly reduced fuel consumption compared to systems with catalytic reactor systems that would operate throughout flight operations.

Other system configurations and modes of operation are included in this disclosure. For example, the catalytic reactor feed flow path 414 could be equipped with an alternate air inlet from an air source, which could be the air source 402 (connected through a bypass flow path (not shown) around the air separator 404) or a different air source (not shown), and the system could be operated in a mode (i.e., a fourth mode) in which the air separator 404 is in a non-operative state and inert gas is provided only by the catalytic reactor 222.

As discussed in various aspects above and shown in FIGS. 2 and 3, the systems disclosed herein can include a controller 244. The controller 244 can be in operative communication with the air separator 404, the catalytic reactor 222, and any associated valves, pumps, compressors, conduits, ejectors, pressure regulators, or other fluid flow components, and with switches, sensors, and other electrical system components, and any other system components to operate the inert gas system. These control connections can be through wired electrical signal connections (not shown) or through wireless connections. In some embodiments, the controller 244 can be configured to operate the system according to specified parameters, as discussed in greater detail further above. The controller 244 can be an independent controller dedicated to controlling the inert gas generating system, or can interact with other onboard system controllers or with a master controller. In some embodiments, data provided by or to the controller 244 can come directly from a master controller.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an", "the", or "any" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the appended claims. In addition, many modifications may be made to adapt a particular situation or material to the teachings of the present disclosure without departing from the scope of the appended claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fuel tank inerting system for an aircraft, comprising:
a fuel tank (202);
an air separator (404) comprising an air inlet, a membrane with a permeability differential between oxygen and nitrogen, an oxygen-depleted air outlet, and an oxygen-enriched air outlet;
a catalytic reactor (222) arranged to receive oxygen-depleted air from the oxygen-depleted air outlet and fuel, to react the fuel with oxygen in the oxygen-depleted air, and to discharge an inert gas from a reactor outlet; and
an inert gas flow path (420) arranged to receive inert gas from the reactor outlet, and **characterized in that** the inert gas flow path is arranged to direct inert gas to the fuel tank, and the system further **characterized by** comprising a reactant flow path from the air separation module oxygen-depleted air outlet to a catalytic reactor inlet, and an inert gas bypass flow path from the air separation module oxygen-depleted air outlet to the fuel tank and bypassing the catalytic reactor.

2. The system of claim 1, further comprising a controller programmed to operate the system in at least two alternate modes selected from:
a first mode in which oxygen-depleted air is directed from the air separation module oxygen-depleted air outlet to the fuel tank through the inert gas bypass flow path and the catalytic reactor is in a non-operative or stand-by mode,
a second mode in which oxygen-depleted air is directed from the air separation module oxygen-depleted air outlet through the reactant flow path to the catalytic reactor inlet and the catalytic reactor is an operative mode, and
a third mode in which oxygen-depleted air is directed from the air separation module oxygen-depleted air outlet to the fuel tank through the inert gas bypass flow path, and in which oxygen-depleted air is directed from the air separation module oxygen-depleted air outlet through the reactant flow path to the catalytic reactor inlet and the catalytic reactor is in an operative mode.

3. The system of claim 2, in which the controller is programmed to operate the system in the first and second modes, the first and third modes, or the first, second, and third modes.

4. The system of claim 2, wherein the controller is programmed to operate the system in the first mode in response to a demand signal for inert gas at a first inert gas flow rate, and to operate the system in the second mode or the third mode in response to a demand signal for inert gas at a second inert gas flow rate that is greater than the first inert gas flow rate.

5. The system of claim 2, wherein the controller is programmed to operate the system in the second mode or the third mode in response to an aircraft operating condition including descent, and in the first mode in response to an aircraft operating condition not including descent.

6. The system of any preceding claim, further comprising a heater arranged to heat oxygen-depleted air received by catalytic reactor, or further comprising a cooler arranged to cool inert gas generated by the reactor, or further comprising a heater arranged to heat oxygen-depleted air received by catalytic reactor and a cooler arranged to cool inert gas generated by the reactor.

7. A method of operating the system of any preceding claim, comprising directing oxygen-depleted air from the air separator to the catalytic reactor, directing fuel from the fuel tank to the catalytic reactor, reacting the fuel with oxygen in the oxygen-depleted air in the catalytic reactor to produce an inert gas, and **characterized by** directing the inert gas from the catalytic reactor to the fuel tank, and further comprising directing oxygen-depleted air from the air separator to the fuel tank, and wherein oxygen-depleted air is alternately directed between the air separator and one of: the fuel tank and the catalytic reactor.

8. The method of claim 7, wherein oxygen-depleted air is jointly directed to the fuel tank and the catalytic reactor.

9. The method of claim 7, wherein the system is operated in a first mode in which oxygen-depleted air is directed from the air separation module oxygen-depleted air outlet to the fuel tank through the inert gas bypass flow path and the catalytic reactor is in a non-operative or stand-by mode, and in at least one mode selected from:
a second mode in which oxygen-depleted air is directed from the air separation module oxygen-depleted air outlet through the reactant flow path to the catalytic reactor inlet and the catalytic reactor is an operative mode, and
a third mode in which oxygen-depleted air is directed from the air separation module oxygen-depleted air outlet to the fuel tank through the inert gas bypass flow path, and in which oxygen-depleted air is directed from the air separation module oxygen-depleted air outlet through the reactant flow path to the catalytic reactor inlet and the catalytic reactor is in an operative mode.

10. A method of producing an inert gas, comprising:
separating air, with an air separator, through a membrane with a permeability differential between oxygen and nitrogen to produce oxygen-enriched air and oxygen-depleted air; and
catalytically reacting, in a catalytic reactor, a fuel with oxygen in the oxygen-depleted air to produce the inert gas, **characterized by** directing the inert gas from the catalytic reactor to the fuel tank, and further comprising directing oxygen-depleted air from the air separator to the fuel tank, and wherein oxygen-depleted air is alternately directed between the air separator and one of: the fuel tank and the catalytic reactor.

11. A method of inerting a fuel tank, comprising producing an inert gas according to the method of claim 10.

12. The method of claim 11, including operation in a first mode in which the oxygen-depleted air is directed from the membrane to the fuel tank without catalytic reaction of the fuel and oxygen, and operation in at least one alternate mode comprising:
a second mode in which the oxygen-depleted air is directed from the membrane to a catalyst, and oxygen in the oxygen-depleted air is catalytically reacted with fuel at the catalyst.

## Patentansprüche

1. Kraftstofftankinertisierungssystem für ein Luftfahrzeug, Folgendes umfassend:
einen Kraftstofftank (202);
einen Luftabscheider (404), der einen Lufteinlass, eine Membran mit einer Permeabilitätsdifferenz zwischen Sauerstoff und Stickstoff, einen Auslass für sauerstoffverarmte Luft und einen Auslass für sauerstoffangereicherte Luft umfasst;
einen katalytischen Reaktor (222), der angeordnet ist, um sauerstoffverarmte Luft aus dem Auslass für sauerstoffverarmte Luft und Kraftstoff aufzunehmen, den Kraftstoff mit Sauerstoff in der sauerstoffverarmten Luft umzusetzen und ein Inertgas aus einem Reaktorauslass abzugeben; und
einen Inertgasströmungsweg (420), der angeordnet ist, um Inertgas von dem Reaktorauslass aufzunehmen, und **dadurch gekennzeichnet, dass** der Inertgasströmungsweg angeordnet ist, um Inertgas zu dem Kraftstofftank zu leiten, und das System ferner **dadurch gekennzeichnet ist, dass** es einen Reaktantenströmungsweg von dem Luftabscheidungsmodulauslass für sauerstoffverarmte Luft zu einem Einlass des katalytischen Reaktors und einen Inertgasumgehungsströmungsweg von dem Luftabscheidungsmodulauslass für sauerstoffverarmte Luft zu dem Kraftstofftank und unter Umgehung des katalytischen Reaktors umfasst.

2. System nach Anspruch 1, ferner umfassend eine Steuerung, die programmiert ist, um das System in mindestens zwei alternativen Modi zu betreiben, die aus Folgenden ausgewählt sind:
einem ersten Modus, in dem sauerstoffverarmte Luft von dem Luftabscheidungsmodulauslass für sauerstoffverarmte Luft durch den Inertgasumgehungsströmungsweg zu dem Kraftstofftank geleitet wird und sich der katalytische Reaktor in einem Nichtbetriebs- oder Stand-by-Modus befindet,
einem zweiten Modus, in dem sauerstoffverarmte Luft von dem Luftabscheidungsmodulauslass für sauerstoffverarmte Luft durch den Reaktantenströmungsweg zu dem Einlass des katalytischen Reaktors geleitet wird und sich der katalytische Reaktor in einem Betriebsmodus befindet, und
einem dritten Modus, in dem sauerstoffverarmte Luft von dem Luftabscheidungsmodulauslass für sauerstoffverarmte Luft durch den Inertgasumgehungsströmungsweg zu dem Kraftstofftank geleitet wird, und in dem sauerstoffverarmte Luft von dem Luftabscheidungsmodulauslass für sauerstoffverarmte Luft durch den Reaktantenströmungsweg zu dem Einlass des katalytischen Reaktors geleitet wird und sich der katalytische Reaktor in einem Betriebsmodus befindet.

3. System nach Anspruch 2, bei dem die Steuerung programmiert ist, um das System in dem ersten und zweiten Modus, in dem ersten und dritten Modus oder in dem ersten, zweiten und dritten Modus zu betreiben.

4. System nach Anspruch 2, wobei die Steuerung programmiert ist, um das System in Reaktion auf ein Anforderungssignal für Inertgas mit einer ersten Inertgasdurchflussrate in dem ersten Modus zu betreiben, und um das System in Reaktion auf ein Anforderungssignal für Inertgas mit einer zweiten Inertgasdurchflussrate, die größer als die erste Inertgasdurchflussrate ist, in dem zweiten oder dritten Modus zu betreiben.

5. System nach Anspruch 2, wobei die Steuerung programmiert ist, um das System in Reaktion auf einen Luftfahrzeugbetriebszustand, der einen Sinkflug beinhaltet, in dem zweiten Modus oder in dem dritten Modus und in Reaktion auf einen Luftfahrzeugbetriebszustand, der keinen Sinkflug beinhaltet, in dem ersten Modus zu betreiben.

6. System nach einem der vorhergehenden Ansprüche, ferner umfassend ein Heizgerät, das angeordnet ist, um die von dem katalytischen Reaktor aufgenommene sauerstoffverarmte Luft zu erwärmen, oder ferner umfassend einen Kühler, der angeordnet ist, um das von dem Reaktor erzeugte Inertgas zu kühlen, oder ferner umfassend ein Heizgerät, das angeordnet ist, um die von dem katalytischen Reaktor aufgenommene sauerstoffverarmte Luft zu erwärmen, und einen Kühler, der angeordnet ist, um das von dem Reaktor erzeugte Inertgas zu kühlen.

7. Verfahren zum Betreiben des Systems nach einem der vorhergehenden Ansprüche, umfassend Leiten von sauerstoffverarmter Luft aus dem Luftabscheider zu dem katalytischen Reaktor, Leiten von Kraftstoff aus dem Kraftstofftank zu dem katalytischen Reaktor, Umsetzen des Kraftstoffs mit Sauerstoff in der sauerstoffverarmten Luft in dem katalytischen Reaktor, um ein Inertgas zu erzeugen, und **gekennzeichnet durch** Leiten des Inertgases von dem katalytischen Reaktor zu dem Kraftstofftank, und ferner umfassend Leiten von sauerstoffverarmter Luft aus dem Luftabscheider zu dem Kraftstofftank, und wobei sauerstoffverarmte Luft abwechselnd zwischen dem Luftabscheider und einem von Folgenden geleitet wird: dem Kraftstofftank oder dem katalytischen Reaktor.

8. Verfahren nach Anspruch 7, wobei sauerstoffverarmte Luft gemeinsam zu dem Kraftstofftank und dem katalytischen Reaktor geleitet wird.

9. Verfahren nach Anspruch 7, wobei das System in einem ersten Modus betrieben wird, in dem sauerstoffverarmte Luft von dem Luftabscheidungsmodulauslass für sauerstoffverarmte Luft durch den Inertgasumgehungsströmungsweg zu dem Kraftstofftank geleitet wird und sich der katalytische Reaktor in einem Nichtbetriebs- oder Stand-by-Modus und in mindestens einem Modus befindet, der aus Folgenden ausgewählt ist:
einem zweiten Modus, in dem sauerstoffverarmte Luft von dem Luftabscheidungsmodulauslass für sauerstoffverarmte Luft durch den Reaktantenströmungsweg zu dem Einlass des katalytischen Reaktors geleitet wird und sich der katalytische Reaktor in einem Betriebsmodus befindet, und
einem dritten Modus, in dem sauerstoffverarmte Luft von dem Luftabscheidungsmodulauslass für sauerstoffverarmte Luft durch den Inertgasumgehungsströmungsweg zu dem Kraftstofftank geleitet wird, und in dem sauerstoffverarmte Luft von dem Luftabscheidungsmodulauslass für sauerstoffverarmte Luft durch den Reaktantenströmungsweg zu dem Einlass des katalytischen Reaktors geleitet wird und sich der katalytische Reaktor in einem Betriebsmodus befindet.

10. Verfahren zum Erzeugen eines Inertgases, Folgendes umfassend:
Trennen von Luft mit einem Luftabscheider durch eine Membran mit einer Permeabilitätsdifferenz zwischen Sauerstoff und Stickstoff, um sauerstoffangereicherte Luft und sauerstoffverarmte Luft zu erzeugen; und
katalytisches Umsetzen eines Kraftstoffs mit Sauerstoff in der sauerstoffverarmten Luft in einem katalytischen Reaktor, um das Inertgas zu erzeugen, **gekennzeichnet durch** Leiten des Inertgases von dem katalytischen Reaktor zu dem Kraftstofftank, und ferner umfassend Leiten von sauerstoffverarmter Luft aus dem Luftabscheider zu dem Kraftstofftank, und wobei sauerstoffverarmte Luft abwechselnd zwischen dem Luftabscheider und einem von Folgenden geleitet wird: dem Kraftstofftank oder dem katalytischen Reaktor.

11. Verfahren zum Inertisieren eines Kraftstofftanks, umfassend Erzeugen eines Inertgases gemäß dem Verfahren nach Anspruch 10.

12. Verfahren nach Anspruch 11, beinhaltend den Betrieb in einem ersten Modus, in dem die sauerstoffverarmte Luft von der Membran zu dem Kraftstofftank ohne katalytische Reaktion des Kraftstoffs und des Sauerstoffs geleitet wird, und den Betrieb in mindestens einem alternativen Modus, der Folgendes umfasst:
einen zweiten Modus, in dem die sauerstoffverarmte Luft von der Membran zu einem Katalysator geleitet wird und der Sauerstoff in der sauerstoffverarmten Luft an dem Katalysator katalytisch mit Kraftstoff umgesetzt wird.

## Revendications

1. Système d'inertage de réservoir de carburant pour un aéronef, comprenant :
un réservoir de carburant (202) ;
un séparateur d'air (404) comprenant une entrée d'air, une membrane ayant un différentiel de perméabilité entre l'oxygène et l'azote, une sortie d'air appauvri en oxygène et une sortie d'air enrichi en oxygène ;
un réacteur catalytique (222) agencé pour recevoir de l'air appauvri en oxygène provenant de la sortie d'air appauvri en oxygène et du carburant, pour faire réagir le carburant avec l'oxygène dans l'air appauvri en oxygène, et pour évacuer un gaz inerte d'une sortie de réacteur ; et
un trajet d'écoulement de gaz inerte (420) agencé pour recevoir du gaz inerte provenant de la sortie du réacteur, et **caractérisé en ce que** le trajet d'écoulement de gaz inerte est agencé pour diriger un gaz inerte vers le réservoir de carburant, et le système étant **caractérisé en outre en ce qu'**il comprend un trajet d'écoulement de réactif de la sortie d'air appauvri en oxygène de module de séparation d'air à une entrée de réacteur catalytique, et un trajet d'écoulement de dérivation de gaz inerte de la sortie d'air appauvri en oxygène de module de séparation d'air au réservoir de carburant et contournant le réacteur catalytique.

2. Système selon la revendication 1, comprenant en outre un dispositif de commande programmé pour faire fonctionner le système dans au moins deux modes alternatifs sélectionnés parmi :
un premier mode dans lequel l'air appauvri en oxygène est dirigé de la sortie d'air appauvri en oxygène de module de séparation d'air vers le réservoir de carburant à travers le trajet d'écoulement de dérivation de gaz inerte et le réacteur catalytique est dans un mode non opérationnel ou mode veille,
un deuxième mode dans lequel l'air appauvri en oxygène est dirigé de la sortie d'air appauvri en oxygène de module de séparation d'air à travers le trajet d'écoulement de réactif jusqu'à l'entrée de réacteur catalytique et le réacteur catalytique est en mode opérationnel, et
un troisième mode dans lequel l'air appauvri en oxygène est dirigé de la sortie d'air appauvri en oxygène de module de séparation d'air vers le réservoir de carburant à travers le trajet d'écoulement de dérivation de gaz inerte, et dans lequel l'air appauvri en oxygène est dirigé de la sortie d'air appauvri en oxygène de module de séparation d'air à travers le trajet d'écoulement de réactif jusqu'à l'entrée de réacteur catalytique et le réacteur catalytique est en mode opérationnel.

3. Système selon la revendication 2, dans lequel le dispositif de commande est programmé pour faire fonctionner le système dans les premier et deuxième modes, les premier et troisième modes, ou les premier, deuxième et troisième modes.

4. Système selon la revendication 2, dans lequel le dispositif de commande est programmé pour faire fonctionner le système dans le premier mode en réponse à un signal de demande de gaz inerte à un premier débit de gaz inerte, et pour faire fonctionner le système dans le deuxième mode ou le troisième mode en réponse à un signal de demande de gaz inerte à un second débit de gaz inerte qui est supérieur au premier débit de gaz inerte.

5. Système selon la revendication 2, dans lequel le dispositif de commande est programmé pour faire fonctionner le système dans le deuxième mode ou le troisième mode en réponse à une condition de fonctionnement d'aéronef incluant la descente, et dans le premier mode en réponse à une condition de fonctionnement d'aéronef n'incluant pas la descente.

6. Système selon une quelconque revendication précédente, comprenant en outre un dispositif de chauffage agencé pour chauffer l'air appauvri en oxygène reçu par un réacteur catalytique, ou comprenant en outre un dispositif de refroidissement agencé pour refroidir un gaz inerte généré par le réacteur, ou comprenant en outre un dispositif de chauffage agencé pour chauffer l'air appauvri en oxygène reçu par un réacteur catalytique et un dispositif de refroidissement agencé pour refroidir un gaz inerte généré par le réacteur.

7. Procédé de fonctionnement du système selon une quelconque revendication précédente, comprenant le fait de diriger l'air appauvri en oxygène du séparateur d'air vers le réacteur catalytique, le fait de diriger un carburant du réservoir de carburant vers le réacteur catalytique, la réaction du carburant avec l'oxygène présent dans l'air appauvri en oxygène dans le réacteur catalytique pour produire un gaz inerte, et **caractérisé par** le fait de diriger le gaz inerte du réacteur catalytique vers le réservoir de carburant, et comprenant en outre le fait de diriger l'air appauvri en oxygène du séparateur d'air vers le réservoir de carburant, et dans lequel l'air appauvri en oxygène est alternativement dirigé entre le séparateur d'air et l'un parmi : le réservoir de carburant et le réacteur catalytique.

8. Procédé selon la revendication 7, dans lequel l'air appauvri en oxygène est dirigé conjointement vers le réservoir de carburant et le réacteur catalytique.

9. Procédé selon la revendication 7, dans lequel le système fonctionne dans un premier mode dans lequel l'air appauvri en oxygène est dirigé de la sortie d'air appauvri en oxygène de module de séparation d'air vers le réservoir de carburant à travers le trajet d'écoulement de dérivation de gaz inerte et le réacteur catalytique est en mode non opérationnel ou mode veille, et dans au moins un mode choisi parmi :
un deuxième mode dans lequel l'air appauvri en oxygène est dirigé de la sortie d'air appauvri en oxygène de module de séparation d'air à travers le trajet d'écoulement de réactif jusqu'à l'entrée de réacteur catalytique et le réacteur catalytique est en mode opérationnel, et
un troisième mode dans lequel l'air appauvri en oxygène est dirigé de la sortie d'air appauvri en oxygène de module de séparation d'air vers le réservoir de carburant à travers le trajet d'écoulement de dérivation de gaz inerte, et dans lequel l'air appauvri en oxygène est dirigé de la sortie d'air appauvri en oxygène de module de séparation d'air à travers le trajet d'écoulement de réactif jusqu'à l'entrée de réacteur catalytique et le réacteur catalytique est en mode opérationnel.

10. Procédé de production d'un gaz inerte, comprenant :
la séparation d'air, avec un séparateur d'air, à travers une membrane ayant un différentiel de perméabilité entre l'oxygène et l'azote pour produire de l'air enrichi en oxygène et de l'air appauvri en oxygène ; et
la réaction catalytique, dans un réacteur catalytique, d'un carburant avec l'oxygène présent dans l'air appauvri en oxygène pour produire le gaz inerte, **caractérisé par** le fait de diriger le gaz inerte du réacteur catalytique vers le réservoir de carburant, et comprenant en outre le fait de diriger l'air appauvri en oxygène du séparateur d'air vers le réservoir de carburant, et dans lequel l'air appauvri en oxygène est alternativement dirigé entre le séparateur d'air et l'un parmi : le réservoir de carburant et le réacteur catalytique.

11. Procédé d'inertage d'un réservoir de carburant, comprenant la production d'un gaz inerte selon le procédé de la revendication 10.

12. Procédé selon la revendication 11, comportant le fonctionnement dans un premier mode dans lequel l'air appauvri en oxygène est dirigé de la membrane vers le réservoir de carburant sans réaction catalytique du carburant et de l'oxygène, et un fonctionnement dans au moins un mode alternatif comprenant :
un deuxième mode dans lequel l'air appauvri en oxygène est dirigé de la membrane vers un catalyseur, et l'oxygène présent dans l'air appauvri en oxygène réagit catalytiquement avec le carburant au niveau du catalyseur.
